# EUROPÄISCHE PATENTSCHRIFT

(11) **EP 1 256 421 B1**
(45) Veröffentlichungstag und Bekanntmachung des Hinweises auf die Patenterteilung: **23.01.2008**
(21) Anmeldenummer: 02009105.4
(22) Anmeldetag: 24.04.2002
(51) Int. Cl.: B25J 15/06, B65G 47/91

(54) **Sauggreifer mit einstellbaren Anschlägen**
Suction gripper provided with adjustable abutment members
Tête de préhension par aspiration équipée de butées réglables

(30) Priorität: 02.05.2001 DE 10121344
(43) Veröffentlichungstag der Anmeldung: 13.11.2002
(73) Patentinhaber: FFT FLEXIBLE FERTIGUNGSTECHNIK GmbH & Co. KG, 35325 Mücke (DE)
(72) Erfinder: Dietz, Siegfried Erwin, 35327 Ulrichstein/Wohnfeld (DE); Kreutzer, Hans-Jürgen, 35329 Gemünden-Felda 1 (DE); Steubing, Christof, 35329 Gemünden-Felda 1 (DE)
(74) Vertreter: Schwabe - Sandmair - Marx

(56) Entgegenhaltungen:
- DE-C- 19 817 777
- FR-A- 2 724 644
- FR-A- 2 793 434
- PATENT ABSTRACTS OF JAPAN vol. 1995, no. 03, 28. April 1995 (1995-04-28) & JP 06 336392 A (TOSHIBA CORP), 6. Dezember 1994 (1994-12-06)
- PATENT ABSTRACTS OF JAPAN Bd. 1996, Nr. 03, 29. März 1996 (1996-03-29) -& JP 07 291440 A (TOSHIBA CORP), 7. November 1995 (1995-11-07)
- PATENT ABSTRACTS OF JAPAN Bd. 017, Nr. 324 (M-1433), 21. Juni 1993 (1993-06-21) -& JP 05 038693 A (FANUC LTD), 19. Februar 1993 (1993-02-19)

## Beschreibung

Die Erfindung betrifft eine zum Greifen von Gegenständen, beispielsweise Kraftfahrzeugscheiben oder Karosserieteilen, mittels eines Roboterarmes, ausgebildete Greifvorrichtung, welche einen Träger mit wenigstens einen Sauggreifer hat, der jeweils einen elastischen, auf den zu greifenden Gegenstand aufsetzbaren, mit Unterdruck beaufschlagbaren, tassenartigen Saugkörper und einen die Position des gegriffenen Gegenstandes festliegenden. Anschlag aufweist, wobei der Anschlag in Greifrichtung relativ zu dem Träger verschieblich angeordnet ist und eine motorisch betätigbare Klemmvorrichtung zum Fixieren des Anschlags nach einem festgelegten Hub entgegen der Greifrichtung aufweist. Weiterhin betrifft die Erfindung ein Verfahren zum Greifen und Montieren von Gegenständen.

Greifvorrichtungen der vorstehenden Art werden beispielsweise bei der Kraftfahrzeugfertigung zur automatischen Scheibenmontage eingesetzt. Dabei tritt das Problem auf, dass solche Scheiben zwar im Bereich ihrer mit einem Scheibenflansch einer Fensteröffnung des Kraftfahrzeugs zu verklebenden Außenkontur relativ maßgenau sind, im übrigen Bereich jedoch hinsichtlich ihrer Wölbung relativ stark voneinander abweichen. Das kann beim Greifen der Scheibe mit solchen Greifvorrichtungen dazu führen, dass die Scheiben im gegriffenen Zustand unerwünscht stark gebogen werden, weil beispielsweise zwischen zwei die Scheibe berührenden Anschlägen ein Anschlag erheblichen Abstand von der Scheibe hat und die Scheibe dann bei Unterdruckbeaufschlagung auch gegen diesen Anschlag gezogen wird. Das kann dazu führen, dass die Scheibe nach dem Andrücken gegen den Scheibenflansch und Entfernen der Greifvorrichtung die Tendenz hat, in ihre ursprüngliche Form zurückzuspringen, was zu einem teilweisen Lösen von dem Scheibenflansch führen kann.

Wenn man mit einer Greifvorrichtung unterschiedliche Scheiben greifen will, dann ist es erforderlich, die Anschläge der Greifvorrichtung umzurüsten. Müssen rasch hintereinander verschiedene Scheiben gegriffen werden, dann ordnet man hierzu an der Greifvorrichtung für die verschiedenen Scheiben verschieden eingestellte Anschläge an und schwenkt die jeweils nicht benötigten Anschläge in eine beim Greifen nicht störende Position. Auch bei solchen Greifvorrichtungen ist der Wechsel zwischen, verschiedenen Scheiben umständlich und nicht automatisch durchzuführen. Weiterhin ist eine Anpassung an unterschiedliche Scheibentoleranzen nicht möglich.

Eine Greifvorrichtung der oben genannten Art ist in der JP 07-291440 A beschrieben. Die Greifvorrichtung besitzt einen einzigen Sauggreifer der oben beschriebenen Art. Dabei besteht die Klemmvorrichtung aus einer kegelartigen Hülse, die einen Schaft des Anschlages führt, und aus einem Kolben mit einer der Hülse entsprechenden kegelartigen Ausnehmung. In der Hülse sind Kugeln angebracht, die den Schaft einklemmen, wenn der Kolben nach unten auf die Hülse geschoben wird.

Der Erfindung liegt das Problem zugrunde, eine Greifvorrichtung der eingangs genannten Art so zu gestalten, dass auch großflächige Gegenstände sicher gegriffen und transportiert werden können und dass sie dabei automatisch unterschiedliche Toleranzen der zu greifenden Gegenstände auszugleichen vermag, ohne beim Transport des Gegenstandes diesen zu verformen und welche in der Lage ist, unterschiedliche Gegenstände ohne Umrüstarbeit zu greifen. Weiterhin soll ein Verfahren zum Greifen und Montieren von Gegenständen geschaffen werden.

Das erstgenannte Problem wird erfindungsgemäß dadurch gelöst, dass der Anschlag jeweils im Inneren des Saugkörpers angeordnet und von dem Saugkörper umschlossen ist und dass die Greifvorrichtung mehrere von der Art des wenigstens einen Sauggreifers hat.

Bei einer solchen Greifvorrichtung können sich die Anschläge automatisch der jeweiligen Kontur des zu greifenden Gegenstandes anpassen, indem sie sich bei Berührung des Gegenstandes zunächst geringfügig in Richtung des Trägers bewegen und erst geklemmt werden, wenn die Greifvorrichtung ihre Übernahmeposition erreicht hat. Dadurch ist sichergestellt, dass vor der unterdruckbeaufschlagung alle Anschläge den Gegenstand berühren, so dass es zu keiner Verformung des Gegenstandes bei der Unterdruckbeaufschlagung kommen kann.

Die Anschläge müssen in die Nähe der Saugkörper angeordnet werden, damit keine unzulässig hohen Biegemomente auftreten können. Besonders günstig ist es, wenn gemäß der Erfindung der Anschlag jeweils im Inneren des Saugkörpers angeordnet und von dem Saugkörper umschlossen ist. Eine solche Greifvorrichtung ist zudem besonders einfach aufgebaut.

Das Anfahren der zu hebenden Gegenstände und die Erzeugung des geringen Einwärtshubes der Anschläge vor ihrem Klemmen lässt sich mit einfachen Mitteln ermöglichen, wenn der Anschlag durch eine Feder in Greifrichtung vorgespannt ist.

Besonders vorteilhaft ist es, wenn der Anschlag einen mit einem Kolben verbundenen, axial verschieblich geführten Schaft hat und der Kolben einen als Gasdruckfeder wirkenden, druckbeaufschlagbaren Zylinderraum in Ausfahrrichtung des Anschlags begrenzt. Hierdurch hat man die Möglichkeit, die Federkraft dem jeweiligen Einsatzzweck des Greifers anzupassen und an verschiedenen Sauggreifern unterschiedliche Federkräfte einzustellen.

Die Klemmvorrichtung kann sehr unterschiedlich gestaltet sein. Besonders einfach ist sie für einen automatischen Betrieb ausgebildet, wenn sie einen von einem druckmittelbeaufschlagbaren Betätigungskolben in Klemmstellung gegen einen axial verschieblich geführten Schaft des Anschlags beweglichen Klemmkörper aufweist.

Die Anschläge werden in der jeweiligen Position formschlüssig gehalten, so dass sie große axiale Kräfte übertragen können, ohne dass die Gefahr eines Verrutschens relativ zu ihrem Träger besteht, wenn gemäß einer anderen Weiterbildung der Erfindung der Schaft im Bereich des Klemmkörpers mit Außengewinde versehen ist und der Klemmkörper aus zwei Gewindemutterhälften besteht und wenn die Klemmvorrichtung zwei Betätigungskolben hat, welche jeweils zum Verschieben einer Gewindemutterhälfte vorgesehen sind.

Bei Verschleiß ist ein Austausch der Anschläge mit dem Saugkörper und der Klemmvorrichtung möglich, ohne dass die Winkellage der Anschläge und der Saugkörper sich verstellen kann, wenn der Anschlag in einem Führungskörper gehalten ist, der seinerseits lösbar in eine Bohrung eines verstellbar gehaltenen Kugelkopfes eingesetzt ist.

Besonders einfach und rasch kann der vorgenannte Austausch erfolgen, wenn der Führungskörper mit einer Schulter von oben her auf dem Kugelkopf aufsitzt und mit diesem durch Schrauben lösbar verbunden ist .

Die Überwachung des Hubes des jeweiligen Anschlags vor dem Klemmen dieses Anschlags kann mit sehr einfachen Mitteln erfolgen, wenn gemäß einer anderen Weiterbildung der Erfindung der Schaft des Anschlags an der dem Saugkörper gegenüberliegenden Seite aus dem Führungskörper herausragt und an dem Führungskörper ein die Stellung des herausragenden Teiles des Schaftes überwachender Positionssensor angeordnet ist.

Sofern aufgrund von Toleranzen beim Anheben eines flachen Gegenstandes ein größerer Saughub erforderlich wird, beispielsweise um Fluchtungsfehler zwischen dem Saugkörper und dem Gegenstand auszugleichen, kann man vorsehen, dass der Saugkörper als Faltenbalg ausgebildet und an dem Führungskörper befestigt ist.

Wenn besonders große Saugkräfte übertragen werden müssen und die zu hebenden Gegenstände für den Angriff des Saugkörpers eine ausreichend große, ebene Fläche aufweisen, kann man jedoch auch vorsehen, dass der Saugkörper als Saugteller ausgebildet und an dem Schaft des Anschlages befestigt ist.

Ein verfahren gemäß dem Oberbegriff des Anspruches 11 ist in der JP 05-038693 A beschrieben, insbesondere wird eine Greifvorrichtung mit durch Druckzylinder verfahrbaren Anschlägen offenbart.

Das zweitgenannte Problem, nämlich die Schaffung eines Verfahrens zum Greifen und Montieren von Gegenständen gemäß dem Oberbegriff des Anspruches 11, wird erfindungsgemäß dadurch gelöst, dass man die Anschläge für die Übernahme des jeweiligen Gegenstandes zunächst mit hohem Druck vollständig ausfährt und bei der Übernahme mit geringem Druck beaufschlagt, so dass eine Verschiebung der Anschläge entsprechend der Kontur des Gegenstandes möglich ist, und dass man beim Einsetzen des Gegenstandes diesen durch Druckbeaufschlagung der Anschläge in die endgültige Einbaustellung bewegt.

Bei dieser Verfahrensweise kann man nicht nur den jeweiligen Gegenstand optimal und verformungsfrei aufnehmen, sondern ihn auch mit unterschiedlichen Kräften an unterschiedlichen Bereichen in seine Einbaustellung bewegen.

Beim Einbau von Kraftfahrzeugscheiben hat man beispielsweise bisher die Scheiben durch eine Bewegung des Roboterarmes gegen den Scheibenflansch gedrückt. Durch die Erfindung wird es möglich, die Scheibe ausschließlich durch Ausfahren der Anschläge gegen den Scheibenflansch zu bewegen. Dadurch kann man unterschiedliche Bereiche unterschiedlich weit ausfahren, so dass sichergestellt ist, dass die Scheibe in allen Bereichen richtig gegen den Scheibenflansch anliegt.

Eine genaue Position der Scheibe nach dem Aufnehmen bleibt erhalten, wenn die Anschläge nach ihrer Anpassung an die Kontur des jeweiligen Gegenstandes mittels einer Klemmvorrichtung in ihre jeweilige axiale Position fixiert werden.

Die Erfindung lässt verschiedene Ausführungsformen zu Drei davon sind in der Zeichnung dargestellt und werden nachfolgend beschrieben. Diese zeigt in
- Fig.1: einen Endbereich eines Roboterarmes mit einer daran befestigten Greifvorrichtung,
- Fig.2: einen senkrechten Schnitt durch einen Sauggreifer der Greifvorrichtung,
- Fig.3: einen horizontalen Schnitt durch den Sauggreifer entlang der Linie III - III in der Figur 2,
- Fig.4: einen senkrechten Schnitt durch eine zweite Ausführungsform eines Sauggreifers,
- Fig.5: einen senkrechten Schnitt durch eine dritte Ausführungsform eines Sauggreifers.

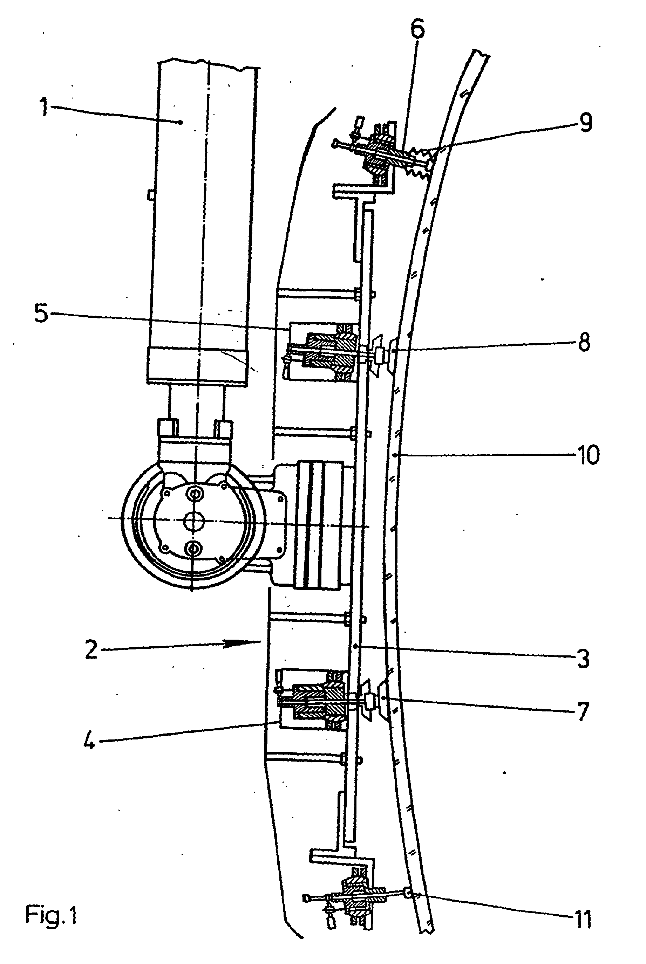

Die Figur 1 zeigt einen Endbereich eines Roboterarmes 1, an welchem eine erfindungsgemäße Greifvorrichtung 2 befestigt ist. Diese Greifvorrichtung 2 hat einen an dem Roboterarm 1 befestigten Träger 3, an welchem mehrere Sauggreifer 4, 5, 6 befestigt sind. Diese halten durch Unterdruckbeaufschlagung jeweils eines Saugkörpers 7, 8, 9 einen flachen Gegenstand 10, bei dem es sich beispielsweise um eine Scheibe eines Kraft fahrzeugs handeln kann. Im unteren Bildteil erkennt man in Figur 1 einen Anschlag 11, der gegen den f lachen Gegenstand 10 anliegt, dem j e-doch kein Saugkörper 7, 8, 9 zugeordnet ist.

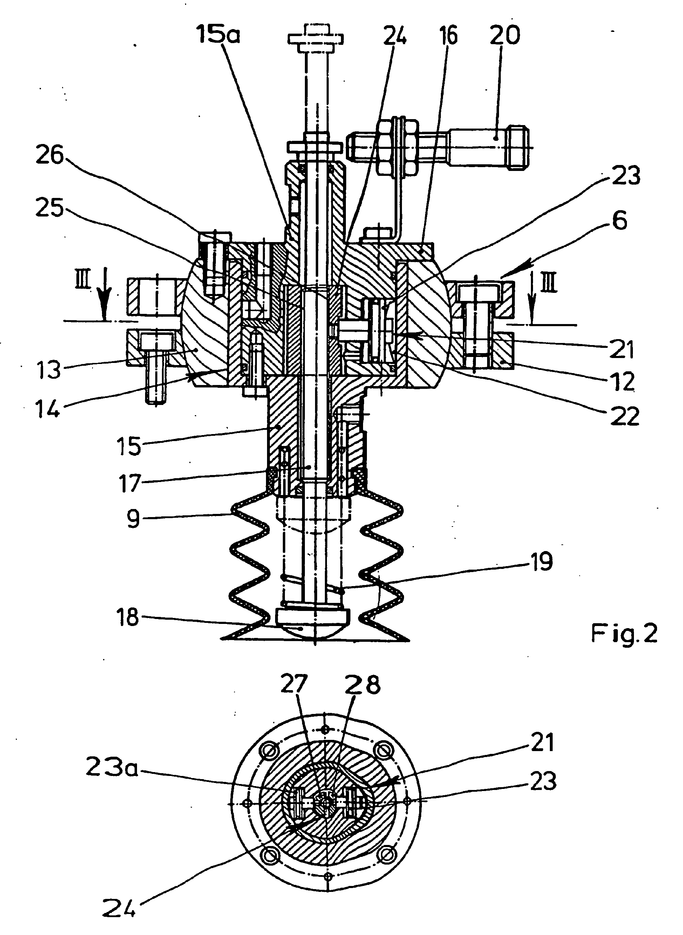

Die Figur 2 zeigt gegenüber Figur 1 stark vergrößert den Sauggreifer 6 als Einzelteil. Dieser hat einen Halter 12, der mit dem in Figur 1 gezeigten Träger 3 zu verschrauben ist. Von dem Halter 12 wird ein Kugelkopf 13 in unterschiedlichen Winkellagen einstellbar und festklemmbar gehalten. Der Kugelkopf 13 hat eine durchgehende Bohrung 14, in der zwei miteinander verschraubte Führungskörper 15, 15a von oben her eingesetzt sind. Der obere Führungskörper 15a sitzt mit einer Schulter 16 auf dem Kugelkopf 13 auf.

Durch die Führungskörper 15, 15a hindurch führt ein Schaft 17 eines Anschlags 18. Eine Feder 19, welche sich einerseits an dem Anschlag 18, andererseits an der unteren Stirnfläche des unteren Führungskörpers 15 abstützt, spannt den Anschlag 18 in der Zeichnung gesehen nach unten hin vor. Nach oben hin ragt der Schaft 17 aus dem oberen Führungskörper 15a heraus. Die Position dieses herausragenden Bereiches wird von einem Positionssensor 20 überwacht, der an dem oberen Führungskörper 15a befestigt ist.

Der Schaft 17 des Anschlags 18 ist mittels einer in dem oberen Führungskörper 15a angeordneten, pneumatischen Klemmvorrichtung 21 in der jeweiligen Stellung relativ zu dem Führungskörper 15a zu klemmen. Hierzu hat die Klemmvorrichtung 21 gegenüberliegend jeweils einen Betätigungszylinder 22 mit einem Betätigungskolben 23, der einen Klemmkörper 24 gegen den Schaft 17 zu pressen vermag.

Zur Erzielung eines Formschlusses bei der Klemmung hat der Schaft 17 im Klemmbereich ein Außengewinde 25, während der Klemmkörper 24 mit einem Innengewinde 26 versehen ist.

Die Figur 2 lässt weiterhin erkennen, dass der Schaft 17 und der Anschlag 18 koaxial zu dem Saugkörper 9 angeordnet ist, bei dem es sich bei dieser Ausführungsform um einen Faltenbalg handelt.

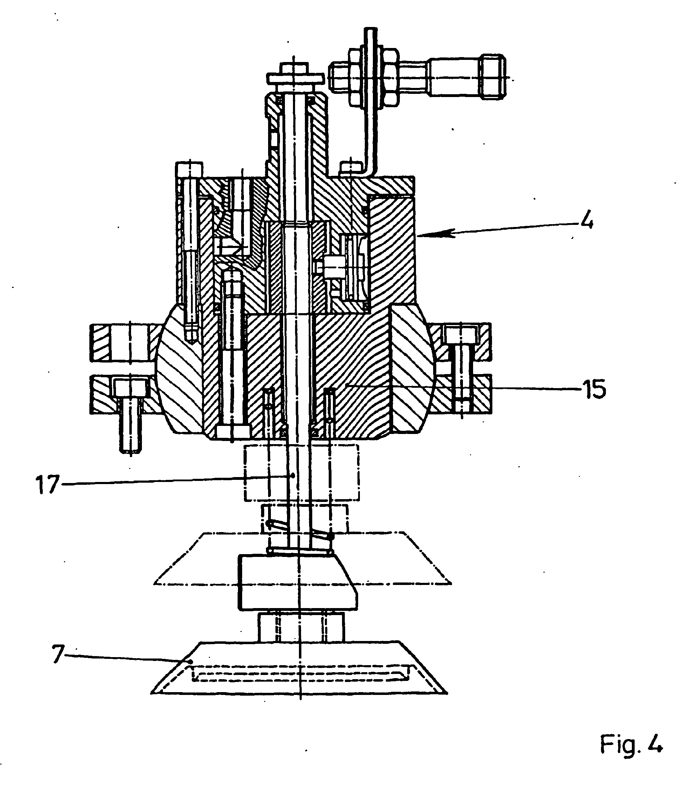

Die Figur 3 zeigt, dass die Klemmvorrichtung 21 einander gegenüberliegend zwei Betätigungskolben 23, 23a aufweist. Entsprechend besteht der Klemmkörper 24 aus zwei Gewindemutterhälften 27, 28.

Bei der Ausführungsform nach Figur 4 ist der Saugkörper 7 als Saugteller ausgebildet und im Gegensatz zu der zuvor beschriebenen Ausführungsform nicht am Führungskörper 15 sondern an dem Schaft 17 befestigt.

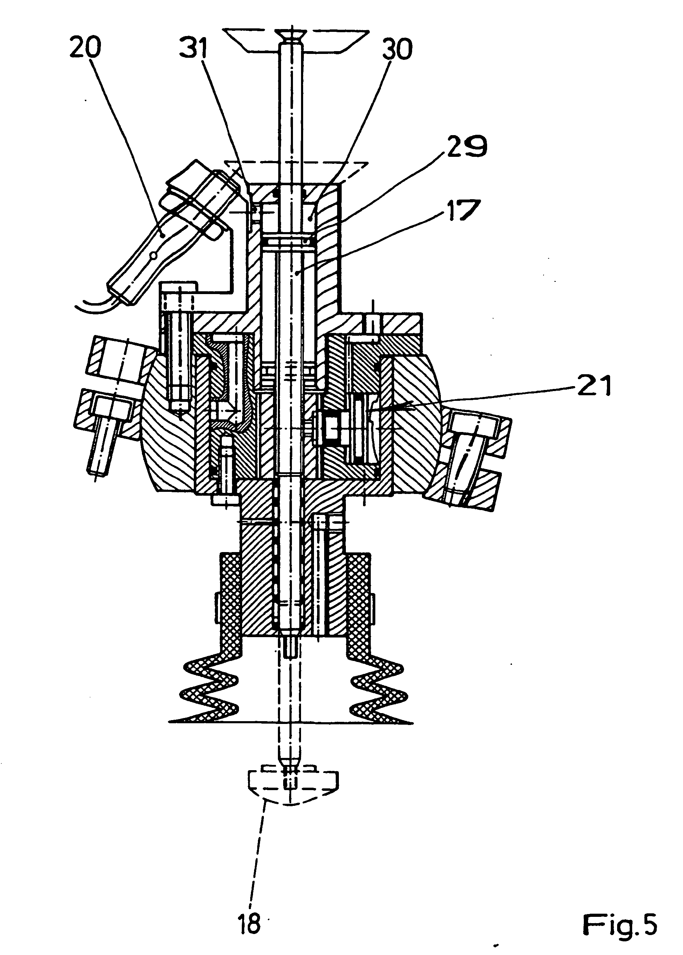

Bei der Ausführungsform nach Figur 5 wurde anstelle der in Figur 2 gezeigten Feder 19 eine Gasdruckfeder vorgesehen. Hierzu ist der Schaft 17 mit einem Kolben 29 verbunden, der einen Zylinderraum 30 in Ausfahrrichtung des Anschlags 18 begrenzt. Der Zylinderraum 30 ist mit einem Druckluftanschluss 31 versehen, so dass man ihn mit mehr oder weniger hohem Druck beaufschlagen kann.

Eine solche Ausführungsform ermöglicht ein neuartiges Montageverfahren. Hierbei fährt man für die Übernahme des jeweiligen Gegenstandes 10 zunächst mit hohem Druck die Anschläge 18 vollständig aus. Bei der Übernahme beaufschlagt man sie mit geringem Druck, so dass eine Verschiebung der Anschläge 18 entsprechend der Kontur des Gegenstandes 10 möglich ist und fixiert die Anschläge 18 nach ihrer Anpassung an die Kontur des jeweiligen Gegenstandes 10 mittels einer Klemmvorrichtung 21. Zum Einsetzen des Gegenstandes 10, beispielsweise einer Kraftfahrzeugscheibe in eine Fensteröffnung, bewegt man diese durch Druckbeaufschlagung der Anschläge 18 in die endgültige Einbaustellung, also gegen den Scheibenflansch.

### Bezugszeichenliste

- 1: Roboterarm
- 2: Greifvorrichtung
- 3: Träger
- 4: Sauggreifer
- 5: Sauggreifer

- 6: Sauggreifer
- 7: Saugkörper
- 8: Saugkörper
- 9: Saugkörper
- 10: Gegenstand

- 11: Anschlag
- 12: Halter
- 13: Kugelkopf
- 14: Bohrung
- 15,15a: Führungskörper

- 16: Schulter
- 17: Schaft
- 18: Anschlag
- 19: Feder
- 20: Positionssensor

- 21: Klemmvorrichtung
- 22: Betätigungszylinder
- 23, 23a: Betätigungskolben
- 24: Klemmkörper
- 25: Außengewinde

- 26: Innen gewinde
- 27: Gewindemutterhälfte
- 28: Gewindemutterhälfte
- 29: Kolben
- 30: Zylinderraum

- 31: Druck luftanschluss

## Patentansprüche

1. Zum Greifen von Gegenständen (10), beispielsweise Kraftfahrzeugscheiben oder Karosserieteilen, mittels eines Roboterarmes (1), ausgebildete Greifvorrichtung (2), welche einen Träger (3) mit wenigstens einem Sauggreifer hat, der einen elastischen, auf den zu greifenden Gegenstand (10) aufsetzbaren, mit Unterdruck beaufschlagbaren, tassenartigen Saugkörper (7, 8, 9) und einen die Position des gegriffenen Gegenstandes (10) festlegenden Anschlag (18) aufweist, wobei der Anschlag (18) in Greifrichtung relativ zu dem Träger (3) verschieblich angeordnet ist und eine motorisch betätigbare Klemmvorrichtung (21) zum Fixieren des Anschlags (18) nach einem festgelegten Hub entgegen der Greifrichtung aufweist, **dadurch gekennzeichnet, dass** der Anschlag (18) jeweils im Inneren des Saugkörpers (9) angeordnet und von dem Saugkörper (9) umschlossen ist und dass die Greifvorrichtung (2) mehrere Sauggreifer (4, 5, 6) von der Art des wenigstens einen Sauggreifers hat.

2. Greifer nach Anspruch 1, **dadurch gekennzeichnet, dass** der Anschlag (18) durch eine Feder (19) in Greifrichtung vorgespannt ist.

3. Greifer nach Anspruch 2, **dadurch gekennzeichnet, dass** der Anschlag (18) einen mit einem Kolben verbundenen, axial verschieblich geführten Schaft (17) hat und der Kolben einen als Gasdruckfeder wirkenden, druckbeaufschlagbaren Zylinderraum in Ausfahrrichtung des Anschlags (18) begrenzt.

4. Greifer nach zumindest einem der vorangehenden Ansprüche, **dadurch gekennzeichnet, dass** die Klemmvorrichtung (21) einen von einem druckmittelbeaufschlagbaren Betätigungskolben (23) in Klemmstellung gegen einen axial verschieblich geführten Schaft (17) des Anschlags (18) beweglichen Klemmkörper (24) aufweist.

5. Greifer nach Anspruch 4, **dadurch gekennzeichnet, dass** der Schaft (17) im Bereich des Klemmkörpers (24) mit einem Außengewinde (25) versehen ist und der Klemmkörper (24) aus zwei Gewindemutterhälften (27, 28) besteht und dass die Klemmvorrichtung (21) zwei Betätigungskolben (23, 23a) hat, welche jeweils zum Verschieben einer.Gewindemutterhälfte (27, 28) vorgesehen sind.

6. Greifer nach zumindest einem der vorangehenden Ansprüche, **dadurch gekennzeichnet, dass** der Anschlag (18) in einem Führungskörper (15) gehalten ist, der seinerseits lösbar in eine Bohrung (14) eines verstellbar gehaltenen Kugelkopfes (13) eingesetzt ist.

7. Greifer nach Anspruch 6, **dadurch gekennzeichnet, dass** der Führungskörper (15a) mit einer Schulter (16) von oben her auf dem Kugelkopf (13) aufsitzt und mit diesem lösbar verbunden ist.

8. Greifer nach zumindest einem der vorangehenden Ansprüche, **dadurch gekennzeichnet, dass** der Schaft (17) des Anschlags (18) an der dem Saugkörper (9) gegenüberliegenden Seite aus dem Führungskörper (15a) herausragt und an dem Führungskörper (15a) ein die Stellung des herausragenden Teiles des Schaftes (17) überwachender Positionssensor (20) angeordnet ist.

9. Greifer nach zumindest einem der vorangehenden Ansprüche, **dadurch gekennzeichnet, dass** der Saugkörper (9) als Faltenbalg ausgebildet und an dem Führungskörper (15) befestigt ist.

10. Greifer nach zumindest einem der vorangehenden Ansprüche, **dadurch gekennzeichnet, dass** der Saugkörper (7) als Saugteller ausgebildet und an dem Schaft (17) des Anschlages (18) befestigt ist.

11. Verfahren zum Greifen und Montieren von Gegenständen (10), beispielsweise Kraftfahrzeugscheiben oder Karosserieteilen mittels einer Greifvorrichtung (2) an einem Ro-boterarm, welcher einen Träger (3) mit mehreren Sauggreifern (4, 5, 6) hat, die jeweils einen elastischen, auf den zu greifenden Gegenstand (10) aufsetzbaren, mit Unterdruck beaufschlagbaren, tassenartigen Saugkörper (7, 8,9) und einen die Position des gegriffenen Gegenstandes. (10) festlegenden Anschlag (18) aufweisen, wobei man durch ein Druckmedium in Greifrichtung verfahrbare Anschläge (18) benutzt, **dadurch gekennzeichnet, dass** man die Anschläge (18) für die Übernahme des jeweiligen Gegenstandes (10) zunächst mit hohem Druck vollständig ausfährt und bei der Übernahme mit geringem Druck beaufschlagt, so dass eine Verschiebung der Anschläge (18) entsprechend der Kontur des Gegenstandes möglich ist, und dass man beim Einsetzen des Gegenstandes (10) diesen durch Druckbeaufschlagung der Anschläge (18) in die endgültige Einbaustellung bewegt und dass die Anschläge (18) nach ihrer Anpassung an die Kontur des jeweiligen Gegenstandes (10) mittels einer motorisch betätigbaren Klemmvorrichtung (21) in ihre jeweilige axiale Position fixiert werden.

## Claims

1. Gripper apparatus (2) designed for gripping objects (10), for example motor vehicle windows or body components, by means of a robot arm (1), the said apparatus having a carrier (3) with at least one suction gripper comprising an elastic suction cup (7, 8, 9) that can be rested on the object (10) to be gripped and subjected to partial vacuum, a buffer (18) for determining the position of the gripped object (10), the buffer (18) being arranged displaceably relative to the carrier (3) in the gripping direction, and a motor-driven clamping device (21) for immobilizing the buffer (18) after it has executed a fixed stroke in the opposite direction to the gripping direction, **characterized in that** the buffer (18) is arranged in the interior of the respective suction cup (9) and surrounded by the suction cup (9) and **in that** the gripper apparatus (2) has a plurality of suction grippers (4, 5, 6) of the same type as the at least one suction gripper.

2. Gripper according to Claim 1, **characterized in that** the buffer (18) is biased in the gripping direction by a spring (19).

3. Gripper according to Claim 2, **characterized in that** the buffer (18) has an axially displaceably guided shank (17) connected to a piston, and the piston bounds a cylinder space that can be subjected to pressure and acts as a pneumatic spring, in the extending direction of the buffer (18).

4. Gripper according to at least one of the preceding claims, **characterized in that** the clamping device (21) has a clamping body (24) movable by an actuating piston (23) that can be acted on by pressure fluid against an axially displaceably guided shank (17) of the buffer (18) in the clamping position.

5. Gripper according to Claim 4, **characterized in that** the shank (17) is provided with a male screw-thread (25) in the region of the clamping body (24) and the clamping body (24) consists of two threaded half-nuts (27, 28), and **in that** the clamping device (21) has two actuating pistons (23, 23a) each intended to displace one threaded half-nut (27, 28).

6. Gripper according to at least one of the preceding claims, **characterized in that** the buffer (18) is held in a guide body (15) which, in turn, is removably inserted in a bore (14) in an adjustably held tilting head (13).

7. Gripper according to Claim 6, **characterized in that** the guide body (15a) rests on the tilting head (13) from above, and is removably attached thereto, by a shoulder (16).

8. Gripper according to at least one of the preceding claims, **characterized in that** the shank (17) of the buffer (18) projects from the guide body (15a) on the opposite side to the suction cup (9), and a position sensor (20) monitoring the position of the projecting part of the shank (17) is arranged on the guide body (15a).

9. Gripper according to at least one of the preceding claims, **characterized in that** the suction cup (9) is configured as a bellows and is attached to the guide body (15).

10. Gripper according to at least one of the preceding claims, **characterized in that** the suction cup (7) is configured as a suction dish and is attached to the shank (17) of the buffer (18).

11. Method of gripping and assembling objects (10), for example motor vehicle windows or body components, by means of a gripper apparatus (2) on a robot arm that has a carrier (3) with a plurality of suction grippers (4, 5, 6) each comprising an elastic suction cup (7, 8, 9) that can be rested on the object (10) to be gripped and subjected to partial vacuum, and a buffer (18) for determining the position of the gripped object (10), the buffers used (18) being propellable in the gripping direction by a pressure medium, **characterized in that** the buffers (18) for transfer of the individual object (10) are initially fully extended under high pressure and during transfer are subjected to low pressure so that the buffers (18) can be displaced to suit the contour of the object, and **in that** upon insertion of the object (10) the object is moved into the final installed position by applying pressure to the buffers (18) and **in that** once the buffers (18) have adapted to the contour of the individual object (10) they are each fixed in their respective axial position by means of a motor-driven clamping device (21).

## Revendications

1. Dispositif de préhension (2) configuré afin de saisir des objets (10), par exemple des vitres de véhicule ou des éléments de carrosserie à l'aide d'un bras de robot (1), qui comporte un support (3) avec au moins une pince aspirante, qui présente un corps aspirant (7, 8, 9) en forme de tasse, élastique, pouvant être posé sur l'objet à saisir (10), et sur lequel on peut exercer une dépression, et un butoir (18) définissant la position de l'objet saisi (10), moyennant quoi le butoir (18) est disposé de manière mobile dans la direction de préhension par rapport au support (3), et un dispositif de serrage (21) pouvant être actionné de manière motorisée afin de fixer le butoir (18) après une course définie à l'encontre du sens de préhension, **caractérisé en ce que** le butoir (18) est disposé respectivement à l'intérieur du corps aspirant (9) et est entouré par le corps aspirant (9), et **en ce que** le dispositif de préhension (2) comporte plusieurs pinces aspirantes (4, 5, 6) du type de la au moins une pince aspirante.

2. Préhenseur selon la revendication 1, **caractérisé en ce que** le butoir (18) est précontraint par un ressort (19) dans la direction de préhension.

3. Préhenseur selon la revendication 2, **caractérisé en ce que** le butoir (18) présente une tige (17) guidée de manière mobile axialement et reliée à un piston, et le piston délimite un espace cylindrique faisant office de ressort pneumatique, pouvant être sollicité par la pression, dans la direction de déploiement du butoir (18).

4. Préhenseur selon au moins l'une quelconque des revendications précédentes, **caractérisé en ce que** le dispositif de serrage (21) présente un corps de serrage (24) pouvant être déplacé par un piston d'actionnement (23) pouvant être sollicité par des moyens de pression, dans la position de serrage, contre une tige (17) guidée de manière mobile axialement du butoir (18).

5. Préhenseur selon la revendication 4, **caractérisé en ce que** la tige (17), dans la zone du corps de serrage (24), est dotée d'un filetage externe (25) et le corps de serrage (24) est constitué de deux moitiés d'écrou fileté (27, 28), et **en ce que** le dispositif de serrage (21) comporte deux pistons d'actionnement (23, 23a), qui sont respectivement prévus afin de déplacer une moitié d'écrou fileté (27, 28).

6. Préhenseur selon au moins l'une quelconque des revendications précédentes, **caractérisé en ce que** le butoir (18) est maintenu dans un corps de guidage (15), qui est pour sa part inséré de manière amovible dans un alésage (14) d'une tête sphérique (13) maintenue de manière à pouvoir être réglée.

7. Préhenseur selon la revendication 6, **caractérisé en ce que** le corps de guidage (15a) repose avec un épaulement (16) par le dessus sur la tête sphérique (13) et est relié de manière amovible à celle-ci.

8. Préhenseur selon au moins l'une quelconque des revendications précédentes, **caractérisé en ce que** la tige (17) du butoir (18) fait saillie par rapport au corps de guidage (15a) au niveau du côté opposé au corps aspirant (9) et, au niveau du corps de guidage (15a) est disposé un capteur de position (20) surveillant la position de l'élément en saillie de la tige (17).

9. Préhenseur selon au moins l'une quelconque des revendications précédentes, **caractérisé en ce que** le corps aspirant (9) est configuré sous la forme d'un soufflet et est fixé sur le corps de guidage (15).

10. Préhenseur selon au moins l'une quelconque des revendications précédentes, **caractérisé en ce que** le corps aspirant (7) est configuré sous la forme d'une plaque de succion et est fixé sur la tige (17) du butoir (18).

11. Procédé permettant de saisir et de monter des objets (10), par exemple, des vitres de véhicule ou des éléments de carrosserie à l'aide d'un dispositif de préhension (2) sur un bras de robot, qui comporte un support (3) avec plusieurs pinces aspirantes (4, 5, 6), qui présentent respectivement un corps aspirant (7, 8, 9) de type tasse, élastique, pouvant être posé sur l'objet à saisir (10), sur lequel on peut exercer une dépression, et un butoir (18) fixant la position de l'objet saisi (10), moyennant quoi on utilise des butoirs (18) pouvant être déplacés dans la direction de préhension grâce à un milieu sous pression, **caractérisé en ce que** les butoirs, pour recevoir l'objet (10) respectif, sont tout d'abord déployés complètement avec une pression élevée puis, lors de la réception, on exerce sur eux une pression plus faible de telle sorte qu'un déplacement des butoirs (18) correspondant au contour de l'objet est possible, et **en ce que**, lors de l'insertion de l'objet (10), celui-ci peut être déplacé grâce à l'exercice d'une pression sur les butoirs (18) dans la position de montage finale, et **en ce que** les butoirs (18), après avoir été adaptés au contour de l'objet (10) respectif, sont fixés grâce à un dispositif de serrage (21) pouvant être actionné par voie motorisée dans leur position axiale respective.
